# EUROPEAN PATENT SPECIFICATION

(11) **EP 3 506 738 B1**
(45) Date of publication and mention of the grant of the patent: **14.10.2020**
(21) Application number: 17791178.1
(22) Date of filing: 29.08.2017
(51) Int. Cl.: A01J 5/007

(54) **MILKING ROBOT DEVICE**
MELKROBOTER
DISPOSITIF DE ROBOT TRAYEUR

(30) Priority: 30.08.2016 NL 2017386
(43) Date of publication of application: 10.07.2019
(73) Proprietor: Lely Patent N.V., 3147 PB Maassluis (NL)
(72) Inventor: MEIJERS, Georgius Franciscus Maria, 3147 PB Maassluis (NL)
(74) Representative: Octrooibureau Van der Lely N.V.
(86) International application number: PCT/NL2017/050567
(87) International publication number: WO 2018/044159

(56) References cited:
- WO-A1-01/17336
- WO-A1-2008/051134
- GB-A- 2 480 634
- GB-A- 2 486 913

## Description

The invention relates to a milking robot device, comprising at least one milking cup, and in particular four milking cups, which is or are, respectively, configured to be attached to a teat of a dairy animal for the purpose of a milking operation of the dairy animal, a measuring system for determining a flow of milk through the or each milking cup and for determining a milk volume of milk milked by the milking cup, and a control unit for controlling and monitoring the milking device, comprising a functional connection to the measuring system and a display, wherein the control unit is configured to display, on the display, the flow of milk and an indication of the milk volume based on the milk volume, in particular the determined milk volume.

Such milking devices are known per se. These comprise a display, optionally arranged directly on the milking device or connected thereto by means of a network connection. This display may be used to show a multitude of information. Thus, WO01/17336 discloses an automatic milking device according to the preamble of claim 1, with a graphic user environment which indicates a milking status for the teats and which also indicates the flow of milk and the milk yield for the teats once a milking operation has started.

In practice, such a milking device has a drawback. When milking certain dairy animals, errors sometimes occur during operation of the aforementioned milking device, resulting in incorrect (milking) actions with these dairy animals. For example, it may happen that milking continues for an unnecessarily long period of time, or that a farmer is present during milking for an unnecessarily long period of time. In any case, it is undesirable that the operation of the milking device is susceptible to mistakes.

It is an object of the present invention to improve a milking device of the kind described in the preamble in such a way that the operation thereof is more reliable, so that fewer mistakes occur during milking operations.

The invention achieves or comes close to achieving this object by means of a milking robot device according to Claim 1, in particular a milking robot device, comprising at least one milking cup, and in particular four milking cups, which is or are, respectively, configured to be attached to a teat of a dairy animal for the purpose of a milking operation of the dairy animal, a measuring system for determining a flow of milk through the or each milking cup and for determining a milk volume of milk milked by the milking cup, and a control unit for controlling and monitoring the milking device, comprising a functional connection to the measuring system and a display, wherein the control unit is configured to display, on the display, the flow of milk and an indication of the milk volume based on the milk volume, in particular the determined milk volume, wherein the control unit is configured to display at most one of the flow of milk and the milk volume indication simultaneously for the milking cup or milking cups, as well as to alternate, in particular automatically, based on a criterion, between displaying the flow of milk and displaying the milk volume indication.

The invention is based on the insight that a milking device, in this case a control device or display, preferably shows as little information as possible, but does show the information which is relevant for the actions to be performed. It is virtually always the case that the milk yield is by far the most relevant to a farmer. However, in some cases, it is more important to see what the current flow of milk is. It is never or hardly ever necessary to see both data simultaneously in order to be able to make decisions. Showing both data could thus also cause confusion or delay in taking a decision. By now configuring the control device in such a way that both values are never shown simultaneously, at least never for one and the same teat, and in such a way that it alternates between displaying either the flow of milk or the milk volume, according to certain rules, i.e. based on a criterion, it is ensured that the displayed information can be applied quickly, effectively and reliably by the farmer. As a result thereof, it will be possible to largely prevent mistakes during milking.

In this case, it should be noted that the control device and/or the display should of course be capable of displaying each of the two values. Obviously, the values in each case relate to one milking operation of an animal. The values may be displayed in a variety of ways, such as by means of a row of LEDs, graphically in a diagram, as a numerical value, etc. The sensors for determining the values may be different, such as a separate milk flow meter and a separate milk volume meter. It is also possible to determine both values using one sensor, for example by determining the milk volume using a milk volume meter and determining the flow of milk from the time derivative of the milk volume.

Here, it should furthermore be noted that the control device may be configured to display the milk volume by default. Thus, a farmer, who is after all absent by default during a milking operation by a milking robot device, will be shown the information which is generally most relevant when he approaches the milking robot device as standard, without having to perform a separate action. However, this does not exclude the possibility of configuring the control unit in such a way that it displays the flow of milk by default, if desired, and in particular for switching to displaying the milk volume after a threshold value of the flow of milk has been reached. In embodiments, the control unit is therefore configured to display the flow of milk for the milking cup when an associated milking operation starts, and to switch to displaying the milk volume indication as soon as the flow of milk exceeds a predetermined threshold flow, in particular for a predetermined minimum time period.

Further particular forms are described in the dependent claims and in the description which follows below.

In embodiments, the first criterion comprises that the dairy animal to be milked is milked under supervision or is a dairy animal to be milked under supervision. If the animal is a dairy animal to be milked under supervision, this animal will in principle always be milked in the presence of a supervising or operating individual, and not automatically. Such an indication will then be included in a database, such as the animal management system. If such an animal enters the milking robot device, the operator will receive a signal, so that he can walk to the robot and can supervise the milking operation. Examples of such dairy animals are new dairy animals, which still have to undergo initial milking by or otherwise still have to get accustomed to the milking robot device, to nervous animals, wounded animals, such as those having an injured teat, animals having three teats and the like. It may furthermore be the case that the dairy animal is being milked under supervision by accident or otherwise, for example with a view to observe the dairy animal with regard to health, behaviour etc. During supervised milking, the operator will often have to signal to the milking robot device to indicate that he is present and the milking operation can begin. For example, an associated control button is provided on the control device or there may also be an automatic presence detection by means of a pass, etc. During this milking under supervision, the control unit changes, for example, from (standard) displaying the milk volume to displaying the flow of milk. In many cases, it is initially, that is to say at the start of milking, more important to the operator to have a good indication of the flow of milk, than to have an impression of the total milk yield of this milking operation. Thus, he is better able to assess if the flow of milk is working properly or is disrupted. This may or may not result in additional actions being executed, such as putting cows at ease or even aborting the milking operation. All this will be explained in more detail below, together with additional examples.

In embodiments, the milking robot device comprises an input device which is operatively connected to the control unit so that the user can input at least one first instruction, wherein the control unit is configured to display the flow of milk if the first instruction input into the input device for this dairy animal and received by the control unit satisfies a second criterion, and furthermore to display the milk volume from the start of the milking operation if the control unit did not receive a first instruction for this dairy animal which satisfies said second criterion. In this case, the control unit is therefore configured to display only the flow of milk from both values, when and thus if and as long as the input instruction satisfies a second criterion. This is possible, in particular, from the start of the milking operation, but could also be possible when the first instruction is being input, i.e. while the milking operation is taking place. This embodiment gives the option, for example, to alternate between milk volume and the flow of milk even with animals which do not have to be milked under supervision or are indicated as such to the control unit.

In embodiments, the second criterion may comprise that the animal to be milked is an animal to be milked under supervision. In this case, the second criterion is actually identical to the first criterion. Thus, the operator could, for example, change the status of the animal from "normal" to "milking under supervision" on the basis of an observation, such as a visible teat wound or the like.

In other embodiments, the control device is configured to remove a milking cup during a milking operation if the flow of milk for this milking cup does not reach, in particular exceed, a predetermined threshold value within a predetermined first threshold time period after the start of the milking operation. In particular, the second criterion comprises that an extended threshold time period applies to the dairy animal to be milked which is longer than the first threshold time period. In general, a milking robot device will not continue the milking operation indefinitely if no flow of milk is generated. The reason for this is that this may be caused by a variety of reasons, such as a milking cup which has been incorrectly attached, such as to the udder or with a folded teat, or, for example, due to a disturbing event, such as a loud noise or an aggressive stray dog, as a result of which the dairy animal retains the milk and milking will, at least for some time, not be possible. In order to prevent prolonged sucking of a non-milking teat, the milking robot device will thus interrupt the milking operation as not successful, if the flow of milk remains below a predetermined threshold value for a predetermined first threshold time period after the start of the milking operation. However, according to the invention, it is possible to input an extended threshold time period as the first instruction. For example, it is possible to input an extended threshold time period for new dairy animals, which have to become accustomed to the milking robot device, in which case it is assumed that the milking will really get underway in this case. Also in some other cases, such as with a nervous dairy animal, it may be useful to input such an extended threshold time period. Furthermore, it is useful to see the flow of milk particularly with such dairy animals, as the moment this starts to happen is a critical event. Most information can then be obtained by displaying the flow of milk. Once this flow of milk has started to flow (reliably), the control unit can switch to displaying the milk volume for these animals as well. The control unit may be configured to perform this switching automatically, in particular when the flow of milk exceeds the threshold value, immediately or after exceeding during a predetermined time period. Alternatively, the control unit may be configured to switch after the threshold time period has lapsed. It is for example also possible to input a subsequent instruction "reset the threshold time period", which not only configures the control device to reset the threshold time period upon receiving this instruction, but also to switch from the flow of milk to the milk volume. In embodiments, the control unit is therefore configured to switch to displaying the milk volume, either automatically when the flow of milk reaches, in particular exceeds, the predetermined threshold value, or by a second instruction input in the input device to reset the extended threshold time period for this dairy animal to the first threshold time period.

In embodiments, the control unit comprises at least one control button, and in particular four control buttons as touch-sensitive fields on the display which, upon operation of said button, cause the control unit to switch from displaying the milk volume indication to displaying the flow of milk, in particular for the associated milking cup or milking cups and for a predetermined time period or during operation of said button. Such an embodiment is suitable, for example, in order to still be able to determine the current flow of milk during milking, when the default setting is displaying the milk volume. In particular in case of doubts regarding the flow of milk of one or more teats, such an embodiment offers advantages. By operating the button, the flow of milk (or any flow of milk of that dairy animal) associated with the button is displayed, instead of (and in the same location as) the milk volume. The display may last for a fixed time period or for as long as the button is being pressed, or a combination thereof.

In particular, the milking robot device comprises four milking cups, wherein the control unit is configured to display, on the display, for each of the four milking cups, and in particular in the form of an udder, the flow of milk or the milk volume for each milking cup. Such an embodiment is very suitably configured for efficiently displaying the information. Not only does displaying the information in the form of an udder reduce the risk of incorrect interpretation or operation, but in addition, according to the invention, the amount of information which is shown simultaneously is limited, thus reducing the risk of incorrect interpretation or operation still further compared to the simultaneous display of all information.

The invention will now be explained in more detail with reference to the drawing, in which:
Fig. 1 shows a diagrammatic side view of a milking robot device according to the invention, and
Fig. 2 shows a diagrammatic view of an operating unit of a milking robot device according to the invention.

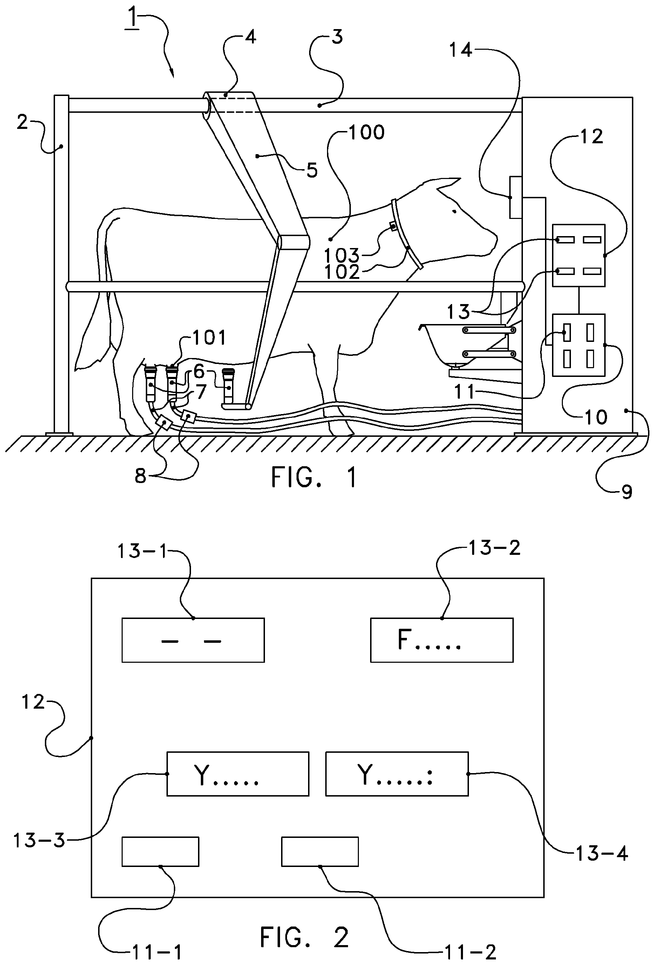

Fig. 1 shows a diagrammatic side view of a milking robot device 1 according to the invention. This comprises a milking stall with milking stall posts 2 and milking stall beams 3, to which a carriage 4 is attached. The carriage 4 carries a robot arm 5 which attaches milking cups 6 to the teats 101 of a dairy animal 100.

Each milking cup 6 ends in a milking hose 7, which is surrounded by a measuring device 8, and which runs to a control cabinet 9 comprising an operating unit 10 with buttons 11 and a display 12 with fields 13.

The dairy animal 100 furthermore wears a collar 102 with an ID tag 103, which is readable by an identification device 14.

In this embodiment, the milking robot device 1 comprises a milking stall for milking a dairy animal 100. Upon entering the milking stall, the dairy animal 100 is recognised by the identification device 14 reading the ID tag 103. The operating unit 10 can then, on the basis of, for example, stored animal data, operate the robot arm 5 to attach the milking cups 6 to the teats 101 of the dairy animal 100, and then to perform the milking operation.

During milking, it is often useful to know how the milking process is progressing. To this end, the operating unit 10 can show relevant data on, for example, a display 12. The milk yield per teat is usually the most useful and this can be determined by means of the measuring device 8 on each milking hose 7. The measuring device often comprises a milk flow meter which is able to determine the milk volume, or milk yield, for each teat by integrating the value in time. The operating unit can then display the milk volume which has been determined for each teat on the display 12. Thus, the operator is able to see how much milk each teat has already yielded, and thus how far the milking operation has already progressed. Such a quantitative value may be absolute, in kg, but also relative, for example in %, compared to a historic value or an expected value.

In principle, such a milking robot device 1 operates completely autonomously, that is to say without human supervision. Nevertheless, there may be occasions when a dairy animal 100 has to be milked under supervision. Examples thereof are dairy animals which are being milked for the first time, which are being milked in a milking robot device for the first time, which are nervous for some reason, which have an injured teat, which have an irregular number of teats, etc. The associated animal data for these animals determine, for example, that they have to be milked under supervision. Upon entering the device 1, the dairy animal 100 will be recognised, and a signal will be emitted to warn an operator. This signal may be visible or audible, such as a siren or an optical signal, but may also be a message to an external device, such as in particular a message to a computer, telephone, PDA or the like. When the operator, usually a farmer, has reached the milking robot device 1, he/she can indicate this by pressing a button 11 or in another manner, following which milking under supervision may begin.

During this milking under supervision, it is often actually relevant to the farmer to have a good overview of the flow of milk in order to see if milking has started well and if the milking cup is attached correctly. This overview is more readily obtained from a milk flow value than from monitoring a milk volume over time. Therefore, in such a case, the operating unit 10 according to the invention is configured, for example, that is to say when displaying 'milking under supervision', to display the milk flow value on the display 12, preferably for each teat. To this end, some designated fields 13 are for example provided on the display 12, in which the value of the flow of milk measured by the measuring device 8 can be displayed for each teat. The fields 13 may be arbitrarily distributed across the display 12, such as below one another, but they preferably correspond to the natural position of the teats on the dairy animal 100. With a cow, this is for example a trapezium, where the rear teats are closer together than the front teats. In this way, the farmer can see at a glance how the milking operation is progressing for each teat. This is due to the fact that he is not being distracted by data which are at that point in time less relevant, such as in particular this milk volume, and there is less risk of mistakes in assessing the teat associated with the milking cup and the milk flow value. Thus, it is also possible to quickly determine if the milking robot device has for example attached a milking cup 6 to a different teat 101 than the one associated with the field 13 or if the milking cup 6 has been attached incorrectly, such as to the udder or with a folded teat 101, etc. It should be noted that it is obviously not ruled out to display more data than the milk flow value on the display 12, but with regard to the milk flow value and the milk volume, the invention is aimed at automatically selecting one of the two and switching between them.

But even if the milking cup has been attached correctly, it will take some time before the milking operation gets underway, in particular with animals which are new or otherwise nervous. If the milking operation has not yet got fully underway, the farmer will be able to see this on the display, per teat, although with a normal milking operation, all teats will usually start simultaneously. In this case, it may suffice to leave the milking device 1 to continue with the milking operation. In such a case, it is sufficient for the operating unit 10 to switch from displaying the flow of milk to displaying the milk volume. This switching operation can be performed in many ways. The farmer may, for example, indicate that he is leaving the milking device 1, e.g. by again pressing the button 11 used to indicate his arrival, after which the operating unit automatically switches to displaying the milk volume. Also, the operating unit 10 may be configured in such a way that it automatically switches to displaying the milk volume when the milk flow value exceeds a threshold value, for example for a threshold time period, such as 5 or 10 seconds.

There is a biological, hormone-related reason for the time period indicated above which elapses before a milking operation can get underway. Starting to milk immediately is rarely, if ever, sensible and would only result in applying a relatively high vacuum to suck on a teat which does not produce any milk yet. In practice, however, it was found that this time may be longer for, in particular, nervous or new animals than for normal animals and animals which are accustomed to the procedure. This is probably due to the fact that animals under stress do not release milk as readily. Incidentally, even with accustomed and healthy animals, something may happen which causes them to retain their milk, after which milking will not be possible for some time. Furthermore, it may be that the milking cup has simply been attached incorrectly, such as to the udder instead of to the teat. For all these and other reasons, it is possible that milking a teat cannot be achieved within a predetermined time period. In order to prevent blind milking for an excessive period, the milking robot installation 1 will terminate the milking operation, and subsequently possibly try again, if the milking operation has not yet got underway after the predetermined time, the maximum blind-milking period has lapsed.

However, if it is already known beforehand or presumed that the milking operation will probably get underway, but that this will take longer than usual, it is possible to input in the animal data that the predetermined time period is longer than usual. The milking robot installation 1 then has a cold start function, so to say, for starting dairy animals. In cases where the blind-milking period is normally, for example, 1 to 2 minutes, this may be selected to be up to 5 minutes. The inputting into the animal data may be done beforehand, when inputting the dairy animal into the database or during daily maintenance of this file, but may also be performed by the farmer when the dairy animal 1 is already in the milking robot installation. For example, the farmer notices that the dairy animal 100 is more nervous than usual, but is nevertheless accustomed. In any case, in such cases with an extended blind-milking period, it is of great importance to indicate the flow of milk. The reason for this is that it is good to cancel the extended maximum blind-milking period if the milking operation is already proceeding well for all teats. The cancellation may be permanent, or may last until a subsequent milking operation, depending on, for example, the behaviour of the dairy animal and its state of health. In any case, in order to be able to assess this properly, according to the invention it is advantageous in such cases if the operating device 10 indicates only the flow of milk at the start of the milking operation and then, if desired, automatically switches to displaying the milk volume after reaching/exceeding a threshold milk flow, after actuating a button 11, etc.

In many of the above embodiments, the dairy animal 100 first enters the milking robot device 1, which alerts the farmer. However, it is also possible for the farmer to collect the dairy animal 100 and to take it to the milking robot device. There, he can then input the desired settings for the milking robot device 1 by means of, for example, the buttons 11 of the operating unit 10. However, it is important to note that simply inputting 'milk under supervision' or 'extend the maximum blind-milking period' will automatically result in the displaying of the milk flow value instead of the milk volume at the start of the milking operation, and to the, optionally automatic, switching to displaying the milk volume after a criterion has been met, such as reaching a milk flow value.

Fig. 2 shows a diagrammatic view of an operating unit 10 of a milking robot device 1 according to the invention. This differs from the embodiment illustrated in Fig. 1 in that the buttons 11 have now been incorporated in the display 12. To this end, the display 12 is now a touch-sensitive display. The buttons 11-1 and 11-2 respectively serve, for example, to indicate that the farmer is present during the milking operation and that the maximum blind-milking period has to be extended, as well as for switching off the respective options by operating the buttons again.

In addition, the fields 13-1 to 13-4 for displaying the desired information are indicated. The fields 13 are again arranged in the form of an udder, although this is not obligatory. The screen illustrated here shows a situation in which milking cups are attached to the teats front right (13-2), rear left (13-3) and rear right (13-4), with the fields 13-3 and 13-4 for the two rear teats here indicating the milk volume with the Y for 'yield' followed by a numerical value, whereas the field for the teat on the front right indicates a milk flow value with the F for 'flow' followed by a numerical value. Incidentally, this indicates that the milking operation as a whole has already got underway and this will be the case almost immediately for the two front teats, provided that they have been correctly attached. In addition, it is also possible to provide the fields 13 themselves as control buttons, for example in order to switch from displaying milk volume Y to flow of milk F and vice versa, if desired. To this end, the farmer can press the respective field once. It is also even possible to indicate per teat that the extended maximum blind-milking period can be reset to the standard time period, although the flow of milk will usually get underway for the dairy animal in its entirety for all teats simultaneously, provided that these are already attached.

## Claims

1. Milking robot device (1), comprising
- at least one milking cup (6), and in particular four milking cups, which is or are, respectively, configured to be attached to a teat (101) of a dairy animal (100) for the purpose of a milking operation of the dairy animal,
- a measuring system (8) for determining a flow of milk through the or each milking cup and for determining a milk volume of milk milked by the milking cup, and
- a control unit (10) for controlling and monitoring the milking device, comprising a functional connection to the measuring system and a display (12), wherein the control unit is configured to display, on the display, the flow of milk and an indication of the milk volume based on the milk volume, in particular the determined milk volume,
**characterized in that**
the control unit is configured to display at most one of the flow of milk and the milk volume indication simultaneously for the milking cup or milking cups, as well as to alternate, in particular automatically, based on a criterion, between displaying the flow of milk and displaying the milk volume indication.

2. Milking robot device according to Claim 1, wherein the first criterion comprises that the dairy animal to be milked is milked under supervision or is a dairy animal to be milked under supervision.

3. Milking robot device according to Claim 1 or 2, comprising an input device (11, 11-1, 11-2) which is operatively connected to the control unit so that the user can input at least one first instruction,
wherein the control unit is configured to display the flow of milk if the first instruction input into the input device for this dairy animal and received by the control unit satisfies a second criterion, and furthermore to display the milk volume from the start of the milking operation if the control unit did not receive a first instruction for this dairy animal which satisfies said second criterion.

4. Milking robot device according to Claim 3, wherein the second criterion comprises that the animal to be milked is an animal to be milked under supervision.

5. Milking robot device according to Claim 3 or 4, wherein the second criterion comprises that an extended threshold time period applies to the dairy animal to be milked which is longer than the first threshold time period.

6. Milking robot device according to one of Claims 3-5, wherein the control unit is configured to switch to displaying the milk volume, either automatically when the flow of milk reaches, in particular exceeds, the predetermined threshold value, or by a second instruction input in the input device to reset the extended threshold time period for this dairy animal to the first threshold time period.

7. Milking robot device according to one of the preceding claims, wherein the control device (10) is configured to remove a milking cup (6) during a milking operation if the flow of milk for this milking cup does not reach, in particular exceed, a predetermined threshold value within a predetermined first threshold time period after the start of the milking operation.

8. Milking robot device according to one of the preceding claims, wherein the control unit is configured to display the flow of milk for the milking cup when an associated milking operation starts, and to switch to displaying the milk volume indication as soon as the flow of milk exceeds a predetermined threshold flow, in particular for a predetermined minimum time period.

9. Milking robot device according to one of the preceding claims, wherein the control unit comprises at least one control button (11, 11-1, 11-2), and in particular four control buttons as touch-sensitive fields on the display which, upon operation of said button, cause the control unit to switch from displaying the milk volume indication to displaying the flow of milk, in particular for the associated milking cup or milking cups and for a predetermined time period or during operation of said button.

10. Milking robot device according to one of the preceding claims, comprising four milking cups, wherein the control unit is configured to display, on the display, for each of the four milking cups, and in particular in the form of an udder, the flow of milk or the milk volume for each milking cup.

## Patentansprüche

1. Melkrobotervorrichtung (1), umfassend:
- mindestens einen Melkbecher (6) und insbesondere vier Melkbecher, der/die jeweils ausgestaltet ist/sind, um an einer Zitze (101) eines Milchviehs (100) für einen Melkvorgang des Milchviehs befestigt zu werden,
- ein Messsystem (8) zum Ermitteln eines Milchflusses durch den oder jeden Melkbecher hindurch und zum Ermitteln eines Milchvolumens der Milch, die durch den Melkbecher gemolken wurde, und
- eine Steuereinheit (10) zum Steuern und Überwachen der Melkvorrichtung, umfassend eine funktionale Verbindung mit dem Messsystem und eine Anzeige (12), wobei die Steuereinheit ausgestaltet ist, um auf der Anzeige den Milchfluss und eine Angabe des Milchvolumens basierend auf dem Milchvolumen, insbesondere dem ermittelten Milchvolumen, anzuzeigen,
**dadurch gekennzeichnet, dass** die Steuereinheit ausgelegt ist, um höchstens einen von dem Milchfluss und der Milchvolumenangabe für den Melkbecher oder die Melkbecher gleichzeitig anzuzeigen, sowie insbesondere automatisch basierend auf einem Kriterium zwischen dem Anzeigen des Milchflusses und dem Anzeigen der Milchvolumenangabe abzuwechseln.

2. Melkrobotervorrichtung nach Anspruch 1, wobei das erste Kriterium umfasst, dass das zu melkende Milchvieh unter Aufsicht gemolken wird oder ein Milchvieh ist, das unter Aufsicht gemolken werden soll.

3. Melkrobotervorrichtung nach Anspruch 1 oder 2, umfassend eine Eingabevorrichtung (11, 11-1, 11-2), die funktional mit der Steuereinheit verbunden ist, so dass der Anwender mindestens eine erste Anweisung eingeben kann,
wobei die Steuereinheit ausgelegt ist, um den Milchfluss anzuzeigen, falls die erste Anweisung, die in die Eingabevorrichtung für dieses Milchvieh eingegeben wird und von der Steuereinheit empfangen wird, ein zweites Kriterium erfüllt, und zudem das Milchvolumen seit dem Start des Melkvorgangs anzuzeigen, falls die Steuereinheit nicht eine erste Anweisung für dieses Milchvieh empfangen hat, die das zweite Kriterium erfüllt.

4. Melkrobotervorrichtung nach Anspruch 3, wobei das zweite Kriterium umfasst, dass das zu melkende Milchvieh ein Tier ist, das unter Aufsicht gemolken werden soll.

5. Melkrobotervorrichtung nach Anspruch 3 oder 4, wobei das zweite Kriterium umfasst, dass für das zu melkende Milchvieh ein verlängerter Schwellenwertzeitraum gilt, der länger als der erste Schwellenwertzeitraum ist.

6. Melkrobotervorrichtung nach einem der Ansprüche 3 bis 5, wobei die Steuereinheit ausgelegt ist, um auf die Anzeige des Milchvolumens entweder automatisch, wenn der Milchfluss den vorbestimmten Schwellenwert erreicht, insbesondere überschreitet, oder durch eine zweite Anweisung umzuschalten, die in die Eingabevorrichtung eingegeben wird, um den verlängerten Schwellenwertzeitraum für dieses Milchvieh auf den ersten Schwellenwertzeitraum zurückzusetzen.

7. Melkrobotervorrichtung nach einem der vorhergehenden Ansprüche, wobei die Steuervorrichtung (10) ausgelegt ist, um während eines Melkvorgangs einen Melkbecher (6) zu entfernen, falls der Milchfluss für diesen Melkbecher nicht innerhalb eines vorbestimmten ersten Schwellenwertzeitraums nach dem Beginn des Melkvorgangs einen vorbestimmten Schwellenwert erreicht, insbesondere überschreitet.

8. Melkrobotervorrichtung nach einem der vorhergehenden Ansprüche, wobei die Steuereinheit ausgelegt ist, um den Milchfluss für den Melkbecher anzuzeigen, wenn ein zugehöriger Melkvorgang beginnt, und auf Anzeigen der Milchvolumenangabe umzuschalten, sobald der Milchfluss einen vorbestimmten Schwellenwertfluss überschreitet, insbesondere für einen vorbestimmten Mindestzeitraum.

9. Melkrobotervorrichtung nach einem der vorhergehenden Ansprüche, wobei die Steuereinheit mindestens eine Steuerschaltfläche (11, 11-1, 11-2) und insbesondere vier Steuerschaltflächen als berührungsempfindliche Felder auf der Anzeige umfasst, die bei Bedienung der Schaltflächen bewirkt, dass die Steuereinheit vom Anzeigen der Milchvolumenangabe auf das Anzeigen des Milchflusses umschaltet, insbesondere für den zugehörigen Melkbecher oder die zugehörigen Melkbecher und für einen vorbestimmten Zeitraum oder während der Bedienung der Schaltfläche.

10. Melkrobotervorrichtung nach einem der vorhergehenden Ansprüche, umfassend vier Melkbecher, wobei die Steuereinheit ausgelegt ist, um auf der Anzeige für jeden der vier Melkbecher und insbesondere in Form eines Euters den Milchfluss oder das Milchvolumen für jeden Melkbecher anzuzeigen.

## Revendications

1. Dispositif de robot trayeur (1) comprenant :
- au moins un gobelet trayeur (6), et en particulier quatre gobelets trayeurs, qui est ou qui sont respectivement configurés pour être fixés à un trayon (101) d'un animal laitier (100) dans l'objectif d'une opération de traite de l'animal laitier,
- un système de mesure (8) destiné à déterminer un débit de lait au travers du gobelet ou de chaque gobelet trayeur ainsi qu'à déterminer un volume du lait trait par le gobelet trayeur, et
- une unité de commande (10) destinée à commander et à surveiller le dispositif trayeur, ce qui comprend une connexion fonctionnelle au système de mesure et un afficheur (12), l'unité de commande étant configurée pour afficher, sur l'afficheur, le débit de lait et une indication du volume de lait sur la base du volume de lait, en particulier du volume de lait déterminé,
**caractérisé en ce que**
l'unité de commande est configurée pour afficher au plus l'un du débit de lait et de l'indication du volume de lait simultanément pour le ou les gobelets trayeurs, tout comme pour alterner, en particulier automatiquement, sur la base d'un critère, entre l'affichage du débit de lait et l'affichage de l'indication du volume de lait.

2. Dispositif de robot trayeur selon la revendication 1, dans lequel le premier critère comprend le fait que l'animal laitier à traire est trait sous supervision ou bien qu'il est un animal laitier à traire sous supervision.

3. Dispositif de robot trayeur selon la revendication 1 ou la revendication 2, comprenant un dispositif d'entrée (11, 11-1, 11-2) qui est relié fonctionnellement à l'unité de commande de sorte à ce que l'utilisateur puisse entrer au moins une première instruction,
dans lequel l'unité de commande est configurée pour afficher le débit de lait si la première instruction saisie dans le dispositif d'entrée pour cet animal laitier et reçue par l'unité de commande satisfait à un second critère, et pour afficher de plus le volume de lait depuis le début de l'opération de traite si l'unité de commande n'a pas reçu de première instruction pour cet animal laitier qui satisfait audit second critère.

4. Dispositif de robot trayeur selon la revendication 3, dans lequel le second critère comprend le fait que l'animal à traire est un animal à traire sous supervision.

5. Dispositif de robot trayeur selon la revendication 3 ou la revendication 4, dans lequel le second critère comprend le fait qu'un intervalle de temps de seuil étendu s'applique à l'animal laitier à traire, lequel est plus long que le premier intervalle de temps de seuil.

6. Dispositif de robot trayeur selon l'une des revendications 3 à 5, dans lequel l'unité de commande est configurée pour basculer vers l'affichage du volume de lait, soit automatiquement lorsque le débit de lait atteint, et en particulier dépasse, la valeur de seuil prédéterminée, soit grâce à une seconde instruction saisie dans le dispositif d'entrée pour réinitialiser l'intervalle de temps de seuil étendu pour cet animal laitier à la valeur du premier intervalle de temps de seuil.

7. Dispositif de robot trayeur selon l'une des revendications précédentes, dans lequel le dispositif de commande (10) est configuré pour retirer un gobelet trayeur (6) pendant une opération de traite si le débit de lait pour ce gobelet trayeur n'atteint pas, et en particulier dépasse, une valeur de seuil prédéterminée dans un premier intervalle de temps de seuil prédéterminé après le début de l'opération de traite.

8. Dispositif de robot trayeur selon l'une des revendications précédentes, dans lequel l'unité de commande est configurée pour afficher le débit de lait pour le gobelet trayeur lorsque débute une opération associée de traite, et pour basculer vers l'affichage de l'indication de volume de lait dès que le débit de lait dépasse un débit de seuil prédéterminé, en particulier pendant un intervalle de temps minimal prédéterminé.

9. Dispositif de robot trayeur selon l'une des revendications précédentes, dans lequel l'unité de commande comprend au moins un bouton de commande (11, 11-1, 11-2), et en particulier quatre boutons de commande utilisés comme champs tactiles sur l'afficheur, lesquels, lors d'une manœuvre dudit bouton, amènent l'unité de commande à basculer de l'affichage de l'indication du volume de lait à l'affichage du débit de lait, en particulier pour le ou les gobelets trayeurs associés et pendant un intervalle de temps prédéterminé ou bien pendant la manœuvre dudit bouton.

10. Dispositif de robot trayeur selon l'une des revendications précédentes, comprenant quatre gobelets trayeurs, l'unité de commande étant configurée pour afficher, sur l'afficheur, pour chacun des quatre gobelets trayeurs, et en particulier sous la forme d'un pis, le débit de lait ou le volume de lait pour chaque gobelet trayeur.
